# EUROPÄISCHE PATENTANMELDUNG

(11) **EP 3 719 363 A1**
(43) Veröffentlichungstag der Anmeldung: **07.10.2020**
(21) Anmeldenummer: 19167310.2
(22) Anmeldetag: 04.04.2019
(51) Int. Cl.: F16K 17/12

(54) **ÜBERDRUCKSCHUTZANORDNUNG**

(71) Anmelder: Siemens Aktiengesellschaft, 80333 München (DE)
(72) Erfinder: Adelt, Niclas Edward William, 45659 Recklinghausen (DE); Myschi, Oliver, 47137 Duisburg (DE); Ruwe, Christian, 47475 Kamp-Lintfort (DE)

(57) **Zusammenfassung**

Die Erfindung betrifft eine Überdruckschutzanordnung (1), die einen Deckel (2) und eine Führungsstange (5) aufweist, wobei ein Verkippen des Deckels (2) beim Öffnen einer Überdruck-Öffnung (3) wirksam verhindert ist.

## Beschreibung

Die Erfindung betrifft eine Überdruckschutzanordnung, umfassend einen Deckel, der an einer Überdruck-Öffnung einer Strömungsmaschine derart dichtend aufliegt, dass ein Ausströmen eines Strömungsmediums aus der Öffnung verhindert ist, wobei die Überdruckschutzanordnung öffnet, wenn ein Überdruck innerhalb der Strömungsmaschine zu einer derart großen Kraft auf den Deckel führt, dass dieser die Öffnung freigibt.

In Strömungsmaschinen, wie beispielsweise Dampfturbinen strömt Dampf mit einem vergleichsweise hohen Druck innerhalb eines Dampfturbinengehäuses. Die Gehäusewandstärken, Dichtungen usw. sind derart ausgelegt, dass der Druck des Dampfes zu keinem Schaden an der Dampfturbine führt. Allerdings sind Betriebssituationen bekannt, die man als Störfall bezeichnen kann, in denen der Druck innerhalb der Dampfturbine schlagartig ansteigt und die Gefahr eines Schadens an der Dampfturbine möglich ist. Um den hohen Druckanstieg im Störfall entgegen zu wirken, werden derzeit Berstscheiben verwendet, die an der Dampfturbinengehäusewand angeordnet werden und bei einem hohen Druckanstieg bersten, so dass eine strömungstechnische Verbindung zwischen einem unter hohen Druck stehenden Innenbereich der Dampfturbine und einem Außenbereich der außerhalb der Dampfturbine entsteht.

Wenn solch eine Berstscheibe nach dem Öffnen des Überdruckschutzes berstet, ist ein weiterer Betrieb der Dampfturbine nicht möglich. Solche Berstscheiben werden beispielweise am Außengehäuse einer Niederdruckdampfturbine oder beispielsweise bei Kondensatoren eingesetzt.

Ein weiteres Problem ist, dass die Laufschaufeln der Dampfturbine vor dem Auslösen des Überdruckschutzes gegen vergleichsweise hohe Drücke laufen, was zu einer Schädigung der Laufschaufel führen kann.

Um die Umgebung vor einer berstenden Berstscheibe zu schützen, wird in der Regel ein Fangkorb um die Berstscheibe angeordnet, die eine Dichtscheibe nach dem Bersten der Berstscheibe quasi einfangen.

Aufgabe der Erfindung ist es, einen verbesserten Überdruckschutz anzugeben.

Gelöst wird dies durch eine Überdruckschutzanordnung, umfassend einen Deckel, der an einer Überdruck-Öffnung einer Strömungsmaschine derart dichtend aufliegt, dass ein Ausströmen eines Strömungsmediums aus der Öffnung verhindert ist, wobei die Überdruckschutzanordnung öffnet, wenn ein Überdruck innerhalb der Strömungsmaschine zu einer derart großen Kraft auf den Deckel führt, dass dieser die Überdruck-Öffnung freigibt, wobei die Überdruckschutzanordnung schließt, wenn der Überdruck nicht mehr ansteht und der Deckel durch sein Eigengewicht auf der Überdruck-Öffnung aufliegt.

Mit der Erfindung wird somit der Weg eingeschlagen, statt einer Berstscheibe einen Deckel zu verwenden, der bei Vorliegen eines Überdruckes angehoben wird und sobald der Überdruck wieder abgebaut ist, schließt. Solch eine erfindungsgemäße Überdruckschutzanordnung ist daher wiederverwendbar. Ein Austausch von Einzelteilen, wie es bei der Berstscheibe erfolgen muss, ist hier nicht vorgesehen.

Ein Vorteil der Erfindung ist, dass der Überdruckschutz einen Selbstschließmechanismus aufweist, der dadurch erfolgt, dass der Deckel durch sein Eigengewicht und nach Abbau des Überdruckes wieder die Überdruck-Öffnung schließt. Ein Vorteil der Erfindung ist, dass der Öffnungsdruck reduziert werden kann. Dadurch können innere Komponenten der Strömungsmaschine im Störfall geschont werden.

Vorteilhafte Weiterbildungen sind in den Unteransprüchen angegeben.

In einer ersten vorteilhaften Weiterbildung weist der Deckel eine Führungsstange auf, die fest mit dem Deckel verbunden ist, wobei der Deckel mit der Führungsstange entlang einer Führung bewegbar ist.

Mit der Führungsstange wird sichergestellt, dass der Deckel nach Druckabfall wieder in seine Ausgangslage fällt.

In einer weiteren vorteilhaften Weiterbildung ist zwischen dem Deckel und der Strömungsmaschine eine Dichtung angeordnet.

Vorteilhafter Weise ist diese Dichtung derart ausgebildet, dass die Dichtung in einer schwalbenschwanzähnlichen Nut angeordnet ist, was dazu führt, dass die innerhalb der Schwalbenschwanznut liegende Rundschnurdichtung nicht aus der schwalbenschwanzähnlichen Nut gelangt.

In einer weiteren vorteilhaften Weiterbildung ist um die Überdruck-Öffnung eine Schutzummantelung angeordnet, die über die Überdruck-Öffnung ragt.

Vorteilhafter Weise ist die Schutzummantelung als Schutzrohr um die Überdruck-Öffnung ausgebildet. Dadurch wird sichergestellt, dass ein ausströmender Dampf nicht zwingend entlang des Strömungsmaschinengehäuses strömt, sondern in einer quasi vertikalen Richtung zum Strömungsmaschinengehäuse.

In einer weiteren vorteilhaften Weiterbildung weist die Schutzummantelung oder das Schutzrohr zumindest einen Schlitz auf, wobei in dem Schlitz ein Verbindungsmittel fest angeordnet ist, wobei das Verbindungsmittel endseitig fest mit einer Hülse verbunden ist, wobei die Hülse ein Loch aufweist, durch die die Führungsstange bewegbar angeordnet ist.

Durch diese vorteilhafte Maßnahme wird sichergestellt, dass der Deckel nach Druckabfall wieder in seine Ausgangslage zurückfällt. Durch das Loch ist eine vorgegebene Bewegungsrichtung der Führungsstange eingehalten. Die Hülse ist starr mit der Schutzummantelung oder dem Schutzrohr über das Verbindungsmittel verbunden. So kann der Deckel nur entlang des Lochs bewegt werden. Das bedeutet, dass bei einem Öffnen der Überdruckschutzanordnung, was zu einer Bewegung des Deckels führt diese nur in Richtung des Lochs erfolgt. Beim Schließen des Deckels bewegt sich der Deckel in der entgegengesetzten Richtung entlang des Lochs zurück in die Ausgangslage.

In einer weiteren vorteilhaften Weiterbildung ist eine zweite Hülse in einem Abstand zur Hülse derart angeordnet, dass ein Verkippen des Deckels wirksam verhindert ist.

In einer weiteren vorteilhaften Weiterbildung sind drei bzw. vier Führungsmitteln vorgesehen. Durch die Verwendung von mehreren Führungsmitteln ist ein Verkippen des Deckels mit der Führungsstange und dem Verbindungsmittel wirksam verhindert. Durch die Anordnung der Verbindungsmittel um 120° (bei der Verwendung von drei Verbindungsmitteln) bzw. 90° (bei Verwendung von vier Verbindungsmitteln) ist die Anordnung stabiler.

Die oben beschriebenen Eigenschaften, Merkmale und Vorteile dieser Erfindung sowie die Art und Weise wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: eine perspektivische Ansicht der Überdruckschutzanordnung,
- Figur 2: eine Querschnittsansicht eines Details der Überdruckschutzanordnung.

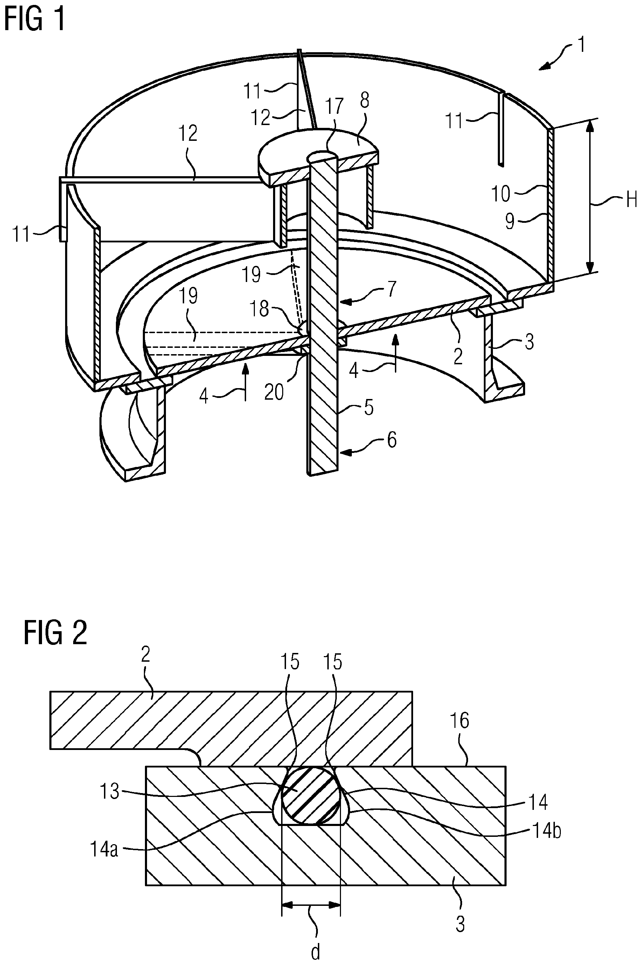

Die Figur 1 zeigt eine Überdruckschutzanordnung 1. Die Überdruckschutzanordnung 1 umfasst einen Deckel 2. Der Deckel 2 liegt dichtend an einer Überdruck-Öffnung 3 einer Strömungsmaschine, wie beispielsweise einer Dampfturbine, insbesondere Niederdruckdampfturbine bzw. eines Kondensators. Der Deckel 2 liegt derart dichtend auf der Überdruck-Öffnung 3, dass ein Ausströmen eines Strömungsmediums aus der Überdruck-Öffnung 3 verhindert ist. Das Eigengewicht des Deckels 2 muss also derart gewählt werden, dass ein innerhalb der Strömungsmaschine herrschenden Druck während des Betriebes nicht zu einer Öffnung bzw. Bewegung des Deckels 2 führt. Solch ein Überdruck ist beispielsweise in einem Störfall vorhanden.

Die Überdruckschutzanordnung 1 öffnet, wenn ein Überdruck innerhalb der Strömungsmaschine zu einer derart großen Kraft 4 auf den Deckel 2 führt, dass dieser die Überdruck-Öffnung 3 freigibt.

Die Überdruckschutzanordnung 1 ist dabei derart ausgebildet, dass diese schließt, wenn der Überdruck nicht mehr ansteht und der Deckel 2 durch sein Eigengewicht auf der Überdruck-Öffnung 3 aufliegt. Der Deckel 2 ist kreisförmig ausgebildet. In der Mitte des Deckels 3 ist eine Führungsstange 5 fest mit dem Deckel 2 verbunden. Die Führungsstange 5 kann mit dem Deckel verschweißt oder verschraubt werden. Die Führungsstange 5 ragt mit einem Unterteil 6 in die Überdruck-Öffnung 3 in die Strömungsmaschine hinein. Oberhalb des Deckels 2 ragt ein Oberteil 7 der Führungsstange 5. An dem Ende des Oberteils 7 ist eine einseitig geschlossene Hülse 8 mit einem Loch 17. Durch dieses Loch 17 ragt das Oberteil 7 hindurch.

Das Unterteil 6 kann mittels einer Führung (teilweise gestrichelt dargestellt) derart ausgebildet werden, dass der Deckel 2 durch die Führung gezwungen wird in einer bestimmten Richtung sich zu bewegen.

Der Deckel ist somit mit der Führungsstange 5 entlang der Führung bewegbar ausgebildet.

Entlang der kreisrunden Überdruck-Öffnung 3 ist eine Schutzummantelung 9 angeordnet. Die Schutzummantelung 9 ist als ein Schutzrohr 10 ausgebildet und weist eine Höhe H auf. Die Höhe H ist hierbei derart, dass diese im Wesentlichen die gleiche Länge hat wie das Oberteil 7 der Führungsstange 5.

In das Schutzrohr 10 sind Schlitze 11 angeordnet. An der Hülse 8 ist ein Verbindungsmittel 12 anordnet, das an dem einen Ende fest mit der Hülse 8 verbunden ist und an dem anderen Ende ebenfalls fest mit dem Schlitz 11 verbunden ist. Die Hülse 8 weist ein Loch 17 auf, durch die die Führungsstange 5 bewegbar angeordnet ist.
Unter dem Deckel 2 ist eine zweite Hülse 18 angeordnet, die ebenfalls ein Loch 20 aufweist, durch das die Führungsstange 5 bewegbar angeordnet ist. Der Abstand zwischen der Hülse 8 und der zweiten Hülse 18 ist ungefähr H. Der Abstand H sollte demnach groß genug sein, damit ein Kippen des Deckels 2 wirksam verhindert ist.
Die zweite Hülse 18 ist über Verbindungsstege 19 fest mit der Überdruck-Öffnung 3 verbunden (teilweise gestrichelt dargestellt) .

In der in Figur 1 dargestellten Ausführungsform sind zwei Verbindungsmittel 12 dargestellt, die in etwa um 90° zu einander versetzt angeordnet sind. In dieser Ausführungsform können insgesamt vier Verbindungsmittel 12 angeordnet werden.

Sofern vier Verbindungsmittel 12 und Schlitze 11 verwendet werden, sollten die Verbindungsmittel 12 um einen Winkel von im Wesentlichen 90° zueinander angeordnet werden. Dadurch ist die Anordnung stabiler.

Die Figur 2 zeigt eine vergrößerte Darstellung des Kontaktes zwischen dem Deckel 2 und der Überdruck-Öffnung 3. Um die Dichtwirkung zwischen dem Deckel 2 und der Überdruck-Öffnung 3 zu verbessern, ist eine Dichtung mit einer Rundschnurdichtung 13, die aus Fluorkautschnuk bestehen kann, ausgebildet. Die Rundschnurdichtung 13 weist im Wesentlichen einen Durchmesser d auf. Die Rundschnurdichtung 13 liegt in einer Schwalbenschwanznut 14. Die Schwalbenschwanznut 14 weist hierbei einen ersten Hinterschnitt 14a und einen zweiten Hinterschnitt 14b auf. Dadurch entsteht eine Einschnürung 15, die derart ausgebildet ist, dass die Rundschnurdichtung 13 nicht aus der Schwalbenschwanznut 14 gelangen kann.

Somit ist sichergestellt, dass die Rundschnurdichtung 13 auch im Störfall, bei dem hohe Geschwindigkeiten des Strömungsmediums entlang der Oberfläche 16 der Überdruck-Öffnung 3 zu erwarten sind, zu keiner Lösung der Rundschnurdichtung 13 aus der Schwalbenschwanznut 14 führt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Überdruckschutzanordnung (1),
umfassend
einen Deckel (2), der an einer Überdruck-Öffnung (3) einer Strömungsmaschine derart dichtend aufliegt, dass ein Ausströmen eines Strömungsmediums aus der Überdruck-Öffnung (3) verhindert ist,
wobei die Überdruckschutzanordnung (1) öffnet, wenn ein Überdruck innerhalb der Strömungsmaschine zu einer derart großen Kraft auf den Deckel (2) führt, dass dieser die Überdruck-Öffnung (3) freigibt,
wobei die Überdruckschutzanordnung (1) schließt, wenn der Überdruck nicht mehr ansteht und der Deckel (2) durch sein Eigengewicht auf der Überdruck-Öffnung (3) aufliegt.

2. Überdruckschutzanordnung (1) nach Anspruch 1,
wobei der Deckel (2) eine Führungsstange (5) aufweist, die fest mit dem Deckel (2) verbunden ist,
wobei der Deckel (2) mit der Führungsstange (5) entlang einer Führung bewegbar ist.

3. Überdruckschutzanordnung (1) nach Anspruch 1 oder 2, wobei zwischen dem Deckel (2) und der Strömungsmaschine eine Dichtung (13) angeordnet ist.

4. Überdruckschutzanordnung (1) nach einem der vorhergehenden Ansprüche,
wobei um die Überdruck-Öffnung (3) eine Schutzummantelung angeordnet ist, die über die Überdruck-Öffnung (3) ragt.

5. Überdruckschutzanordnung (1) nach Anspruch 4,
wobei die Schutzummantelung (9) als Schutzrohr um die Öffnung (3) ausgebildet ist.

6. Überdruckschutzanordnung (1) nach Anspruch 4 oder 5, wobei die Schutzummantelung (9) oder das Schutzrohr zumindest einen Schlitz (11) aufweist,
wobei in dem Schlitz (11) ein Verbindungsmittel (12) fest angeordnet ist, wobei das Verbindungsmittel (12) endseitig fest mit einer Hülse (8) verbunden ist, wobei die Hülse (8) ein Loch (17) aufweist, durch die die Führungsstange (5) bewegbar angeordnet ist.

7. Überdruckschutzanordnung (1) nach Anspruch 6,
mit einer zweiten Hülse (18), die in einem Abstand zur Hülse (8) derart angeordnet ist, dass ein Verkippen des Deckels (2) wirksam verhindert ist.

8. Überdruckschutzanordnung (1) nach Anspruch 7,
wobei die zweite Hülse (18) mit einem Verbindungssteg (19) mit der Überdruck-Öffnung (3) fest verbunden ist.

9. Überdruckschutzanordnung (1) nach Anspruch 6,
mit vier Verbindungsmitteln (12) und Schlitzen (11), wobei die Verbindungsmittel (12) um einen Winkel von im Wesentlichen 90° zueinander angeordnet sind.

10. Überdruckschutzanordnung (1) nach einem der Ansprüche 7 bis 9,
mit vier Verbindungsstegen (19), wobei die Verbindungsstege (19) um einen Winkel von im Wesentlichen 90° zueinander angeordnet sind.

11. Überdruckschutzanordnung (1) nach einem der vorhergehenden Ansprüche,
wobei die Strömungsmaschine als Dampfturbine ausgebildet ist.
